Europäisches Patentamt

European Patent Office

Office européen des brevets

(19)

(11) **EP 0 861 209 B1**

(12) **FASCICULE DE BREVET EUROPEEN**

(45) Date de publication et mention
de la délivrance du brevet:
**18.08.1999 Bulletin 1999/33**

(51) Int Cl.⁶: **C01F 11/02**, C04B 2/04

(21) Numéro de dépôt: 96937943.7

(86) Numéro de dépôt international:
**PCT/BE96/00111**

(22) Date de dépôt: 18.10.1996

(87) Numéro de publication internationale:
**WO 97/14650 (24.04.1997 Gazette 1997/18)**

(54) **PARTICULES DE Ca(OH)2**

CALCIUMHYDROXIDTEILCHEN

Ca(OH)2 PARTICLES

(84) Etats contractants désignés:
**AT BE CH DE DK ES FI FR GB GR IE IT LI LU NL
PT SE**
Etats d'extension désignés:
**RO**

(30) Priorité: **19.10.1995 BE 9500870**

(43) Date de publication de la demande:
**02.09.1998 Bulletin 1998/36**

(73) Titulaire: **S.A. LHOIST RECHERCHE ET
DEVELOPPEMENT
B-1342 Ottignies-Louvain-La-Neuve (BE)**

(72) Inventeurs:
• **LANGELIN, Henri, René
F-62132 Caffiers (FR)**
• **POISSON, Régis
F-92200 Neuilly (FR)**
• **LAUDET, Alain
B-5000 Namur (BE)**
• **FRANCOISSE, Olivier
B-1450 Chastre (BE)**

(74) Mandataire: **Claeys, Pierre et al
Gevers & Vander Haeghen,
Patent Attorneys,
Rue de Livourne 7
1060 Brussels (BE)**

(56) Documents cités:
EP-A- 0 327 902          WO-A-92/01627
WO-A-92/09528          US-A- 2 784 062
US-A- 2 894 820          US-A- 3 366 450
US-A- 4 042 352

EP 0 861 209 B1

EP 0 861 209 B1

## Description

La présente invention a pour objet des particules d'hydroxyde de calcium présentant une teneur en humidité inférieure à 2% en poids et un volume poreux total de désorption d'au moins 0,1 $cm^3/g$.

Pour obtenir une bonne captation d'effluents gazeux ($SO_2$, HCl, ...) au moyen de particules d'hydroxyde de calcium (c'est-à-dire une bonne réactivité chimique), l'homme du métier a préparé des particules de $Ca(OH)_2$ dont la texture a été modifiée pour présenter des pores de grand diamètre pour assurer une bonne diffusion interne. De préférence, la texture est également modifiée pour accroître son activité intrinsèque, c'est-à-dire pour assurer une grande surface spécifique.

Divers procédés de préparation de particules d'hydroxyde de calcium de texture particulière sont connus.

Ainsi, par le procédé à alcool, procédé dans lequel la chaux vive est éteinte en présence d'une large quantité d'alcool, on prépare une chaux hydratée contenant de l'alcool (l'élimination complète de ce dernier étant impossible) se caractérisant par une faible granulométrie (moins de 20 µm), une grande surface spécifique (+ de 30 $m^2/g$) et une faible teneur en eau. Ce procédé nécessite une installation coûteuse, car il est nécessaire de recycler au maximum l'alcool utilisé. En particulier le document WO-A-92/01627 divulgue un procédé à l'alcool fournissant une chaux hydratée ayant une surface spécifique supérieure à 35 $m^2/g$ et un volume poreux total d'au moins 0,25 $cm^3/g$, le volume poreux pour les pores entre 10 nm et 40 nm étant visiblement supérieur à 0,1 $cm^3/g$. Cependant ce document vise la préparation de particules à faible granulométrie (typiquement moins de 2,5 µm) et ne suggère donc pas d'utiliser une répartition granulométrique faisant appel à des particules de fort diamètre selon l'invention permettant un excellent traitement de fumées au moyen de ladite chaux.

Selon un procédé non économique, des particules d'hydroxyde de calcium seraient obtenues par séchage d'un lait de chaux obtenu par extinction de CaO avec un rapport pondéral eau/chaux supérieur à 2. Ce procédé non économique, vu la quantité d'eau à évaporer, ne permet que la préparation de particules de $Ca(OH)_2$ de faible granulométrie (granulométrie principalement inférieure à 10 µm). De plus, la réactivité au $CO_2$ de la chaux sous forme de lait est importante. Cette chaux éteinte après séchage se présente sous la forme de particules présentant principalement des pores de diamètre inférieur à 100 Å (hypothèse d'une géométrie cylindrique pour les pores).

Enfin, on connaît par le document PCT/BE 91/00082 un procédé dans lequel la chaux est éteinte en présence d'additifs particuliers, tels qu'éthylèneglycol, ...

La chaux hydratée obtenue par ce procédé se présente sous le forme de particules de granulométrie non contrôlée, présentant une humidité résiduelle difficile à contrôler pouvant entraîner des problèmes à l'usage, et présentant une grande surface spécifique (plus de 35 $m^2/g$). Cette chaux présente un volume poreux constitué de pores de diamètre compris entre 100 et 400 Å, inférieur à 0,06 $cm^3/g$ (le diamètre des pores étant calculé avec l'hypothèse d'une géométrie. cylindrique, méthode BJH).

On connaît également par le document US-A-2.894.820 des procédés de préparation de particules de chaux hydratée. Selon un premier procédé décrit dans ce document, on éteint de la chaux vive de manière à produire un hydroxyde de calcium sec, et on soumet cet hydroxyde de calcium sec à une classification. Selon un autre procédé, on éteint de la chaux vive de manière à produire un hydroxyde de calcium humide, on sèche ledit hydroxyde de calcium et on soumet cet hydroxyde de calcium séché à une classification. Par ces procédés, on obtient selon ce document des hydroxydes de calcium présentant des surfaces spécifiques BET de moins de 25 $m^2/g$. Des exemples 1 et 2 de ce document, il ressort que les particules agglomérées obtenues par le procédé sec ou par le procédé humide présentent des caractéristiques similaires.

Ce document ne précise nullement le type de chaux vive à utiliser, ni l'importance d'utiliser un procédé d'hydratation humide particulier, ni les précautions à prendre avantageusement lors de l'étape de séchage de l'hydroxyde de calcium humide, pour obtenir un hydroxyde de calcium présentant un volume poreux de désorption à l'azote constitué de pores de diamètre compris entre 100 et 400 Å, calculé selon la méthode BJH sous l'hypothèse d'une géométrie cylindrique des pores, supérieur à 0,06 $cm^3/g$.

Dans la suite de la présente description, on entend par diamètre de pores le diamètre calculé selon la méthode BJH, avec l'hypothèse d'une géométrie cylindrique des pores.

On a remarqué maintenant qu'en utilisant une chaux vive particulière dans un procédé de préparation d'hydroxyde de calcium comprenant une étape d'hydratation de la chaux vive pour obtenir un hydroxyde de calcium présentant une humidité résiduelle comprise entre 15 et 25% et une étape de séchage de l'hydroxyde de calcium humide, il était possible d'obtenir un hydroxyde de calcium sensiblement sec présentant un volume poreux de désorption à l'azote constitué de pores de diamètre compris entre 100 et 400 Å supérieur à 0,1 $cm^3/g$, cet hydroxyde de calcium permettant une excellente absorption du $SO_2$ et de HCl de fumées d'incinérateurs ou d'autres installations industrielles.

La présente invention vise des particules d'hydroxyde de calcium présentant un volume poreux de désorption à l'azote constitué de pores de diamètre compris entre 100 et 400 Å (calculé selon la méthode BJH sous l'hypothèse d'une géométrie cylindrique des pores) supérieur à 0,1 $cm^3/g$. De façon avantageuse, la porosité n'est pas ou peu altérée par une carbonatation lors de l'opération de séchage et de broyage.

Selon une forme de réalisation particulière, l'invention a pour objet un mélange de particules d'hydroxyde de calcium présentant une grande porosité définie par des pores de diamètre compris entre 100 et 400 Å, et une répartition granulométrique adéquate permettant un excellent traitement de fumées dans des installations comportant un filtre à manche.

Les particules d'hydroxyde de calcium séchées suivant l'invention présente les caractéristiques suivantes :

* une teneur en humidité inférieure à 2% en poids, de préférence inférieure à 1%,
* une surface spécifique (BET) supérieure à 30m$^2$/g, avantageusement supérieure à 35m$^2$/g, de préférence supérieure à 40m$^2$/g,
* un volume poreux total de désorption à l'azote constitué de pores de diamètre inférieur à 1000Å, supérieur à 0,10 cm$^3$/g,
* un volume poreux partiel de désorption à l'azote constitué de pores de diamètre compris entre 100 et 400Å supérieur à 0,10 cm$^3$/g, et
* une teneur en $CO_2$ inférieure à 2%.

Selon une forme de réalisation avantageuse des particules suivant l'invention, le volume poreux partiel de désorption à l'azote constitué de pores de diamètre compris entre 100 et 400Å est supérieur à 0,12 cm$^3$/g, en particulier supérieur à 0,15 cm$^3$/g.

Selon des formes de réalisation avantageuses, les particules présentent un volume poreux total de désorption à l'azote supérieur à 0,12 cm$^3$/g, en particulier supérieur à 0,20 cm$^3$/g. Dans ces formes de réalisation, le volume poreux partiel de désorption à l'azote constitué de pores de diamètre compris entre 100 et 400Å correspond avantageusement à plus de 50% du volume poreux total. De façon avantageuse, ce volume poreux partiel de désorption 100-400Å correspond à plus de 55% (de préférence plus de 60%, par exemple de 60 à 72%) du volume poreux total de désorption.

Les particules d'hydroxyde de calcium selon l'invention ont avantageusement une granulométrie inférieure à 200 μm, en particulier inférieure à 100 μm.

Les particules selon l'invention forment un mélange comportant :

(a) une première fraction de particules d'hydroxyde de calcium de granulométrie inférieure à 32 μm, et
(b) une deuxième fraction de particules d'hydroxyde de calcium de granulométrie supérieure à 32 μm,

le % en poids du refus à 32 μm (% en poids des particules ne passant pas à travers un tamis de 32 μm d'ouverture) étant compris entre 20 et 50, en particulier entre 30 et 40, par exemple environ 35.

On a remarqué que des mélanges présentant une telle répartition granulométrique (en particulier un refus à 32μm de 30 à 40%), et un volume poreux de désorption à l'azote constitué de pores de diamètre compris entre 100 et 400Å tel que défini présentent une excellente fluidité et des facilités de dosage (dosage précis et facile) et permettent une bonne utilisation (efficacité de traitement, en particulier de traitement de fumées).

Selon une forme de réalisation, les particules d'hydroxyde de calcium présentant une granulométrie inférieure à 32 μm présentent un diamètre médian ( 50 % en poids des particules de la fraction ayant un diamètre inférieur audit diamètre ) inférieur à 20 μm, en particulier inférieur à 10 μm, par exemple inférieur à 5 μm, voire inférieur à 2 μm.

Les particules de granulométrie supérieure à 32 μm ont avantageusement un diamètre médian inférieur à 100 μm, par exemple compris entre 50 et 90 μm, en particulier entre 50 et 80 μm.

La fluidité des particules est avantageusement ajustée entre 40 et 50. Cette fluidité a été mesurée sur un tamiseur Alpine. La fluidité caractérise la vitesse de passage des particules de diamètre inférieur à 90 microns à travers un 'tamis de 90 microns sous l'action d'une aspiration constante (dépression de 100 mm de liquide manométrique de densité 0,88). La fluidité exprimée en % correspond au rapport entre le poids de la fraction inférieure à 90 microns qui a traversé le tamis en 15 secondes et le poids total de la fraction inférieure à 90 microns.

L'invention a également pour objet un procédé pour la préparation de particules selon l'invention tel que défini dans la revendication 10.

Dans ce procédé, on éteint des particules contenant du CaO présentant une réactivité de plus de 30°C/minute, de préférence de plus de 40°C/minute au moyen d'une quantité d'eau suffisante pour obtenir, en fin de réaction d'extinction, un hydroxyde de calcium présentant une humidité résiduelle comprise entre 15 et 30% en poids, avantageusement de moins de 25%, de préférence d'environ 20 à 25%, en particulier de 21 à 23%. L'hydroxyde de calcium ainsi préparé est séché pour réduire sa teneur en eau à moins de 2% en poids, de préférence à moins de 1% en poids. Le séchage s'effectue au moyen d'un gaz (air, azote, etc ...) présentant une température inférieure à 500°C et une teneur en $CO_2$ inférieure à 500 mg/Nm$^3$ (en particulier inférieure à 350 mg/Nm$^3$, de préférence inférieure à 200 mg/Nm$^3$) pour abaisser son humidité résiduelle à moins de 2% et pour obtenir des particules d'hydroxyde de calcium après séchage dont la teneur en $CO_2$ (par rapport à la matière sèche) correspond sensiblement à la teneur en $CO_2$ (par rapport à la matière sèche) des particules avant séchage. Le séchage est donc du type indirect, c'est-à-dire qu'on évite de mettre directement en contact les particules à sécher avec des gaz de combustion. Un tel chauffage est par exemple un séchage flash, un séchage conductif ou un séchage-broyage, le séchage-broyage en une seule opération étant préféré.

La réactivité des particules de chaux vive est calculée selon la Norme DIN 1060 Partie n°3 - chaux pour bâtiment - Méthode d'essais n°10 - Edition 1982, cette réactivité correspondant à la période de temps nécessaire à compter du début de la réaction d'extinction de 150g de CaO avec 600g d'eau pour atteindre une température de 60°C, la température initiale étant de 20°C. En d'autres mots, une chaux de réactivité de plus de 40°C/minute correspond à une chaux permettant d'obtenir une température de 60°C en moins de 1 minute.

Selon une forme de réalisation possible, on effectue le séchage dans une chambre dans laquelle on crée un courant de gaz de séchage entre une entrée et une sortie, la température du gaz de séchage introduit dans la chambre étant comprise entre 250 et 500°C, en particulier de 300 à 450°C, tandis que la température du gaz de séchage sortant de la chambre a une température au moins supérieure à 110°C, de façon avantageuse de 120 à 150°C. Il va de soi que le séchage est opéré de manière telle qu'on évite tout problème de condensation dans la chambre de séchage.

Après ou pendant le séchage, on contrôle la granulométrie des particules par une étape de broyage éventuellement précédée ou suivie d'une étape de séparation.

L'opération de broyage est effectuée sous une atmosphère contrôlée, de sorte qu'après séchage et broyage, la teneur en $CO_2$ des particules d'hydroxyde de calcium est de préférence au plus supérieure de 0,3% par rapport à la teneur en $CO_2$ des particules d'hydroxyde de calcium avant séchage. En particulier, après séchage et broyage, la teneur en $CO_2$ des particules d'hydroxyde de calcium est au plus supérieure de 0,2% par rapport à la teneur en $CO_2$ des particules d'hydroxyde de calcium avant séchage. Cette opération de broyage est effectuée de manière à éviter au maximum toute carbonatation. L'opération de broyage est effectuée en présence d'un gaz présentant une teneur en $CO_2$ inférieure à 500 mg/$Nm^3$ (en particulier inférieure à 350 mg/$Nm^3$, de préférence inférieure à 200 mg/$Nm^3$).

Dans le procédé selon l'invention, on utilise des particules de CaO présentant une granulométrie inférieure à 5mm, en particulier des particules de CaO de granulométrie 0-2mm.

Selon le procédé selon l'invention, on effectue une opération de broyage d'au moins une partie des particules d'hydroxyde de calcium séchées. Cette opération de broyage est règlée ou contrôlée de manière à obtenir des particules d'hydroxyde de calcium qui, éventuellement après mélange à des particules d'hydroxyde de calcium séchées, mais non broyées, forment un mélange de particules comportant une première fraction de particules d'hydroxyde de calcium de granulométrie supérieure à 32 µm et une deuxième fraction de particules d'hydroxyde de calcium de granulométrie inférieure à 32 µm, le % en poids du refus à 32 µm étant compris entre 10 et 90.

La balance granulométrique des particules (première fraction / deuxième fraction) du mélange peut être corrigée ou modifiée en ajustant les paramètres du broyeur.

Par exemple, pour modifier la balance granulométrique, on sépare une fraction des particules séchées, on soumet la fraction restante des particules séchées à un broyage, et on mélange au moins partiellement des particules de la fraction séparée et des particules de la fraction broyée. Par exemple, on sépare avant broyage la fraction de granulométrie inférieure à 32 µm.

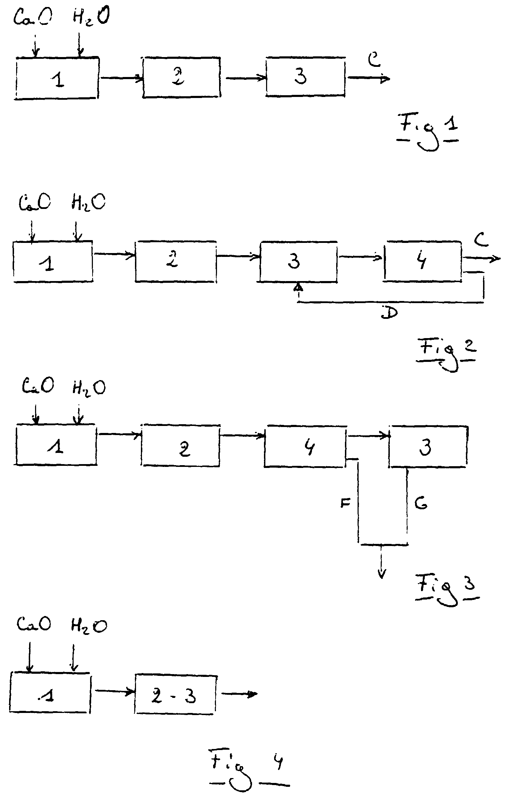

Des particularités et détails de l'invention ressortiront de la description suivante d'exemples de réalisation. Dans cette description, il est fait référence aux figures 1 à 4 ci-annexés qui montrent de façon schématique des procédés selon l'invention.

## DESCRIPTION DE PROCEDES

### Procédé de la figure 1

Selon le procédé de la figure 1, on effectue en 1 une hydratation de CaO en utilisant un rapport eau/chaux suffisant pour obtenir un hydroxyde de calcium présentant une humidité résiduelle d'environ 22% en poids. Les particules de CaO présentaient une granulométrie comprise entre 0 et 2 mm et une réactivité d'environ 45°C/minute.

En 2, on sèche l'hydroxyde de calcium préparé en 1 de manière à réduire la teneur en eau à moins de 2% en poids, en particulier à moins de 1%. Le séchage dans le procédé décrit était du type indirect (pas de contact direct de l'hydroxyde de calcium avec les fumées de combustion). En fait le séchage a été effectué au moyen d'air pauvre en $CO_2$ (teneur en $CO_2$ inférieure à 400 mg/$Nm^3$). Cet air chauffé à 400°C a été introduit dans la chambre du sécheur 2 et ressortait de la chambre à une température d'environ 130°C. En fin de séchage, la température superficielle des grains de chaux hydratée était supérieure à environ 110°C.

L'hydroxyde séché en 2 présentait une teneur en humidité inférieure à 1%, de préférence inférieure à 0,5%. Cet hydroxyde séché est amené à un broyeur 3 dont les paramètres de broyage sont réglés de manière à obtenir directement à la sortie du broyeur des particules présentant une balance granulométrique prédéterminée. L'opération de broyage a été effectuée sous une atmosphère pauvre en $CO_2$.

Après séchage et broyage, la teneur en $CO_2$ des particules d'hydroxyde de calcium était de moins de 0,3% supérieure à la teneur en $CO_2$ des particules d'hydroxyde de calcium avant séchage et broyage.

Procédé de la figure 2

Le procédé de la figure 2 est similaire à celui représenté à la figure 1, si ce n'est que les particules broyées sortant du broyeur 3 sont amenées à un séparateur aérodynamique 4 pour séparer de celles-ci une partie des particules de granulométrie supérieure à 32 μm ( par exemple la fraction D de particules de plus de 100 μm ). Des particules d'hydroxyde de calcium C présentant la balance granulométrique + de 32 μm/ - de 32 μm désirée sortent du séparateur 4. La fraction D quant à elle peut être recyclée au broyeur 3.

Dans ce procédé, l'opération de séchage, la séparation aérodynamique et l'opération de broyage ont été effectuées sous atmosphère d'air pauvre en $CO_2$ (teneur en $CO_2$ inférieure à 400 mg/Nm$^3$).

Après séchage, séparation aérodynamique et broyage, la teneur en $CO_2$ des particules d'hydroxyde de calcium était de moins de 0,3% supérieure à la teneur en $CO_2$ des particules d'hydroxyde de calcium avant séchage, séparation aérodynamique et broyage.

Procédé de la figure 3

Le procédé de la figure 3 est similaire à celui de la figure 1, si ce n'est que l'hydroxyde de calcium séché est soumis, avant broyage, à une étape 4 de séparation aérodynamique. La fraction granulométrique supérieure à 32 μm (E) est amenée à un broyeur 3 de manière à corriger la granulométrie de cette fraction. La fraction de particules broyées G sortant du broyeur est ensuite mélangée à la fraction granulométrique F inférieure à 32 μm provenant du séparateur 4.

Dans ce procédé, la séparation aérodynamique et l'opération de broyage ont été effectuées sous atmosphère d'air pauvre en $CO_2$ (teneur en $CO_2$ inférieure à 400 mg/Nm$^3$).

Après séchage, séparation aérodynamique et broyage, la teneur en $CO_2$ des particules d'hydroxyde de calcium était de moins de 0,3% supérieure à la teneur en $CO_2$ des particules d'hydroxyde de calcium avant séchage, séparation aérodynamique et broyage.

Procédé de la figure 4

Dans le procédé de la figure 4, qui est le procédé préféré, on éteint en 1 une chaux vive présentant une teneur en $CO_2$ inférieure à 1,5% (par exemple de 1,2%), une réactivité supérieure à 40°C/minute, et une granulométrie comprise entre 0 et 2 mm. La quantité d'eau utilisée était suffisante pour obtenir un mélange d'hydroxyde de calcium présentant une humidité résiduelle de 22%.

Ce mélange d'hydroxyde de calcium humide a été amené dans un sécheur-broyeur dans lequel on crée un courant d'air chaud. Cet air chaud avait une teneur en $CO_2$ inférieure à 350 mg/m$^3$. La température de l'air introduit dans le sécheur-broyeur était d'environ 450°C et l'air sortant du sécheur-broyeur était d'environ 120-130°C.

L'opération de broyage-séchage était conduite de manière à obtenir un mélange de particules d'hydroxyde de calcium présentant une teneur en humidité de moins de 1% et présentant la balance granulométrique désirée.

La teneur en $CO_2$ du mélange de particules d'hydroxyde de calcium après séchage était de moins de 1,5%. Cette teneur en $CO_2$ du mélange de particules d'hydroxyde de calcium après séchage et broyage était de moins de 0,3% supérieure à la teneur en $CO_2$ des particules d'hydroxyde de calcium avant séchage et broyage (calculée en poids sec). Le procédé a donc permis de limiter une carbonatation indésirée des particules d'hydroxyde de calcium pendant le séchage et le broyage, une telle carbonatation défavorisant l'accessibilité du volume poreux.

La surface spécifique moyenne BET du mélange de particules d'hydroxyde de calcium après séchage-broyage était de 48 m$^2$/g, tandis que le volume poreux des particules se caractérisait par un volume poreux total (volume poreux de désorption à l'azote constitué de pores de diamètre inférieur à 1000Å) de 0,26 cm$^3$/g et un volume poreux partiel 100-400Å (volume poreux de désorption à l'azote constitué de pores de diamètre compris entre 100 et 400Å) de 0,16 cm$^3$/g.

**EXEMPLES DE MELANGES**

En utilisant le procédé de la figure 4, on a préparé différents mélanges de particules selon l'invention, en règlant les paramètres du broyeur-sécheur. Les mélanges ainsi préparés ont été analysés pour déterminer des paramètres choisis parmi :

*   le volume poreux total (VP$_{TOT}$) en cm$^3$/g (volume poreux de désorption à l'azote constitué de pores de diamètre inférieur à 1000Å, calculé selon la méthode BJH sous l'hypothèse d'une géométrie cylindrique des pores);
*   le volume poreux partiel 100-400Å (VP$_{PART}$) en cm$^3$/g (volume poreux partiel de désorption à l'azote constitué de pores de diamètre compris entre 100 et 400Å, calculé selon la méthode BJH sous l'hypothèse d'une géométrie cylindrique des pores);

* le diamètre moyen ($D_{50}$) en $\mu$m (moyenne géométrique);
* la fraction granulométrique supérieure à 32 $\mu$m ($F_{+32}$) en % en poids, et
* la fraction granulométrique inférieure à 32 $\mu$m ($F_{-32}$) en % en poids.

Enfin, pour certains mélanges, on a mesuré la perte de charge (PC) en mm $H_2O$ par mm de couche pour un gaz s'écoulant à travers ladite couche avec une vitesse de 1 cm/s et à une température de 150°C. Cette perte de charge qui est une mesure de la perméabilité a été mesurée par une méthode de perméamétrie de Blaine modifiée (indice de porosité 0,74-0,75) et application de l'équation de Kozeny-Carman.

Le tableau I suivant donne des paramètres caractérisant des mélanges de particules d'hydroxyde de calcium qui ont été préparés :

TABLEAU I

| | Mélange N° | | | | | |
|---|---|---|---|---|---|---|
| | 1 | 2 | 3 | 4 | 5 | 6 |
| $F_{+32}$ | 0 | 10 | 20 | 30 | 50 | 100 |
| $F_{-32}$ | 100 | 90 | 80 | 70 | 50 | 0 |
| $D_{50}$ | 8 | 13 | 17 | 20 | 29 | 56 |
| $VP_{TOT}$ | 0,18 | 0,18 | 0,19 | 0,18 | 0,22 | 0,2 |
| $VP_{PART}$ | 0,1 | 0,1 | 0,11 | 0,1 | 0,14 | 0,12 |
| PC | 866 | 756 | 736 | 556 | 223 | 29 |

Ce tableau I montre qu'en adaptant la balance granulométrique du mélange suivant l'invention, il est possible de réduire la perte de charge d'un facteur d'environ 2 à 4 en sélectionnant une balance granulométrique $F_{+32}/F_{-32}$ comprise entre 30/70 et 50/50 au lieu d'une balance granulométrique $F_{+32}/F_{-32}$ de 0/100.

Ce tableau I montre également que le volume poreux total est constitué majoritairement de pores de diamètre compris entre 100 et 400 Å. Le rapport $VP_{PART}/VP_{TOT}$ est supérieur à 1/2.

## TESTS DE CAPTATION EN LIT FIXE

Des tests de captation de $SO_2$ (test de laboratoire sur lit fixe) ont été réalisés en utilisant les mélanges n° 3 et 4 du tableau I, ainsi que des particules d'hydroxyde de calcium préparées par les procédés de préparation décrits dans l'introduction du présent mémoire.

Ces tests ont été effectués de la manière suivante :

Dans un appareil à lit fixe, on a placé 360 mg de particules d'hydroxyde de calcium et 30 g de sable. On a fait passer à travers ce lit pendant 2 heures un gaz contenant 1500 ppm de $SO_2$, présentant un degré d'humidité de 9% et une température de 300°C. La quantité de gaz pendant cette période de 2 heures correspondait à la quantité de gaz contenant la quantité de $SO_2$ stoéchiométriquement nécessaire pour transformer tout l'hydroxyde de calcium en sulfate de calcium. Le courant gazeux sortant du lit est analysé par une cellule infrarouge pour mesurer la teneur en $SO_2$.

Le taux de captation est déterminé par la formule suivante :

$$(A - B) / A$$

avec :

A   la quantité totale de $SO_2$ entrant pendant une période de 2 heures
B   la quantité totale de $SO_2$ sortant pendant cette période de 2 heures

Ces tests ont montré qu'il était possible d'obtenir sur deux échantillons, un taux de captation de $SO_2$ par les particules respectivement égal à 52 et 53%, alors que ce taux de captation était inférieur à 35% pour les particules selon le document PCT/BE 91/00082.

## TEST INDUSTRIEL

Une campagne d'essais de traitement de fumées provenant d'incinérateurs de déchets ménagers équipés d'un filtre à manche a démontré que les particules selon l'invention permettaient une efficacité de traitement d'effluents gazeux acides de loin meilleure à celle qui pouvait être obtenue en utilisant des particules de Ca(OH)$_2$ du type connu, en particulier du type selon le document PCT/BE 91/00082. Ces essais ont également montré que, grâce à des choix précis de granulométrie (mélange N° 4 du tableau I), le dosage des particules selon l'invention était facile et précis, de sorte que la quantité réellement nécessaire pour obtenir un traitement donné a pu être utilisée.

On a également observé qu'à performance de captation égale de SO$_2$ et HCl des fumées, la quantité d'absorbant nécessaire était réduite de plus de 30% lorsqu'on utilisait un mélange suivant l'invention au lieu de particules de chaux éteinte classique. Ainsi, par exemple pour obtenir un abattement en SO$_2$ et en HCl des fumées de plus de 99%, une quantité de mélange suivant l'invention correspondant à moins de 2,5 fois la quantité stoéchiométriquement nécessaire était suffisante, alors que pour obtenir un abattement en SO$_2$ et en HCl des fumées de 99% au moyen d'une chaux éteinte classique, une quantité de chaux correspondant à plus de quatre fois la quantité stoéchiométriquement nécessaire a dû être utilisée.

Lors de ces essais, la température des fumées traitées variait de 130 à 230°C, tandis que la teneur en SO$_2$ et HCl des fumées à traiter variait respectivement entre environ 100 et 300 mg/Nm$^3$ et entre environ 800 et 1500 mg/Nm$^3$.

## Revendications

1.    Particules d'hydroxyde de calcium séchées présentant une teneur en humidité inférieure à 2% en poids, une surface spécifique supérieure à 30m$^2$/g, un volume poreux total de désorption à l'azote d'au moins 0,1 cm$^3$/g et une teneur en CO$_2$ inférieure à 2%, lesdites particules se présentant sous la forme d'un mélange comprenant une première fraction de particules de granulométrie inférieure à 32μm et une deuxième fraction de particules de granulométrie supérieure à 32μm, le % en poids de refus à 32μm étant compris entre 20 et 50, lesdites particules présentant un volume poreux de désorption à l'azote défini par les pores de diamètre compris entre 100 et 400 Å supérieur à 0,1 cm$^3$/g.

2.    Particules suivant la revendication 1, caractérisées en ce que le % en poids de refus à 32μm est compris entre 30 et 40.

3.    Particules suivant la revendication 2, caractérisées en ce que le % en poids de refus à 32μm est d'environ 35.

4.    Particules suivant l'une des revendications précédentes, caractérisées en ce que le volume poreux de désorption à l'azote défini par les pores de diamètre compris entre 100 et 400 Å est supérieur à 0,12 cm$^3$/g.

5.    Particules suivant l'une des revendications précédentes, caractérisées en ce que le volume poreux de désorption à l'azote défini par les pores de diamètre compris entre 100 et 400 Å est supérieur à 0,15 cm$^3$/g.

6.    Particules suivant l'une des revendications précédentes, caractérisées en ce que le volume poreux de désorption à l'azote défini par les pores de diamètre compris entre 100 et 400 Å est supérieur à 0,20 cm$^3$/g.

7.    Particules suivant l'une des revendications précédentes, caractérisées en ce que les particules d'hydroxyde de calcium de la première fraction présentent un diamètre médian inférieur à 10μm.

8.    Particules suivant l'une des revendications précédentes, caractérisées en ce que les particules d'hydroxyde de calcium de la deuxième fraction présentent un diamètre médian compris entre 50 et 80μm.

9.    Particules suivant l'une des revendications précédentes, caractérisées en ce qu'elles présentent une fluidité comprise entre 40 et 50.

10.    Procédé de préparation de particules suivant l'une des revendications précédentes, dans lequel on éteint des particules contenant du CaO de granulométrie inférieure à 5 mm et présentant une réactivité supérieure à 30°C/minute au moyen d'une quantité d'eau suffisante pour obtenir un hydroxyde de calcium présentant une humidité résiduelle comprise entre 15 et 30% en poids, dans lequel on sèche ledit hydroxyde de calcium au moyen d'un gaz présentant une température inférieure à 500°C, mais au moins supérieure à 110°C, et une teneur en CO$_2$

inférieure à 500 mg/Nm$^3$ pour abaisser son humidité résiduelle à moins de 2%, et dans lequel on broie au moins une partie dudit hydroxyde de calcium séché ou en cours de séchage en présence d'un gaz présentant une teneur en CO$_2$ inférieure à 500 mg/nm$^3$, ledit broyage étant opéré pour obtenir soit en fin de broyage, soit après ajout d'une partie de particules dudit hydroxyde de calcium séchées, mais non broyées, un mélange de particules comprenant une première fraction de particules de granulométrie inférieure à 32μm et une deuxième fraction de particules de granulométrie supérieure à 32μm, le % en poids de refus à 32μm étant compris entre 20 et 50.

11. Procédé suivant la revendication 10, caractérisé en ce qu'on éteint des particules contenant du CaO de granulométrie inférieure à 5 mm et présentant une réactivité supérieure à 30°C/minute au moyen d'une quantité d'eau suffisante pour obtenir un hydroxyde de calcium présentant une humidité résiduelle comprise entre 15 et 25% en poids.

12. Procédé suivant la revendication 10, caractérisé en ce qu'on éteint des particules contenant du CaO de granulométrie inférieure à 5 mm et présentant une réactivité supérieure à 30°C/minute au moyen d'une quantité d'eau suffisante pour obtenir un hydroxyde de calcium présentant une humidité résiduelle comprise entre 21 et 23% en poids.

13. Procédé suivant l'une des revendications 10 à 12, caractérisé en ce qu'on utilise des particules de CaO de granulométrie comprise entre 0 et 2 mm.

14. Procédé suivant l'une des revendications 10 à 13, caractérisé en ce qu'on utilise des particules de CaO présentant une réactivité supérieure à 40°C/minute.

15. Procédé suivant l'une des revendications 10 à 14, caractérisé en ce qu'on effectue le séchage et le broyage sous une atmosphère présentant une teneur en CO$_2$ inférieure à 350 mg/Nm$^3$.

16. Utilisation de particules suivant l'une des revendications 1 à 9 pour le traitement de fumées.

17. Utilisation suivant la revendication 16, dans laquelle on injecte les particules suivant l'une des revendications 1 à 9 dans les fumées, et dans laquelle, après ladite injection, on filtre les fumées dans un filtre à manche.


**Patentansprüche**

1. Getrocknete Calciumhydroxidteilchen, die einen Feuchtigkeitsgehalt unterhalb von 2 Gew.-%, eine spezifische Oberfläche oberhalb von 30 m$^2$/g, ein Porengesamtvolumen der Stickstoffdesorption von wenigstens 0,1 cm$^3$/g und einen CO$_2$-Gehalt unterhalb von 2% aufweisen, wobei die Teilchen in Form eines Gemischs vorliegen, das eine erste Fraktion von Teilchen mit einer Korngröße von weniger als 32 μm und eine zweite Fraktion von Teilchen mit einer Korngröße von mehr als 32 μm umfaßt, wobei der Gewichtsprozentsatz des Rückstands (auf einem Sieb) von 32 μm (Maschenweite) zwischen 20 und 50 liegt, und wobei die Teilchen ein Porenvolumen der Stickstoffdesorption, das durch den Porendurchmesser zwischen 100 und 400 Å definiert ist, oberhalb von 0,1 cm$^3$/g aufweisen.

2. Teilchen nach Anspruch 1, dadurch gekennzeichnet, daß der Gewichtsprozentsatz des Rückstandes bei 32 μm zwischen 30 und 40 liegt.

3. Teilchen nach Anspruch 2, dadurch gekennzeichnet, daß der Gewichtsprozentsatz des Rückstandes bei 32 μm ungefähr 35 beträgt.

4. Teilchen nach einem der vorstehenden Ansprüche, dadurch gekennzeichnet, daß das Porenvolumen der Stickstoffdesorption, das durch den Porendurchmesser zwischen 100 und 400 Å definiert ist, oberhalb von 0,12 cm$^3$/g liegt.

5. Teilchen nach einem der vorstehenden Ansprüche, dadurch gekennzeichnet, daß das Porenvolumen der Stickstoffdesorption, das durch den Porendurchmesser zwischen 100 und 400 Å definiert ist, oberhalb von 0,15 cm$^3$/g liegt.

6. Teilchen nach einem der vorstehenden Ansprüche, dadurch gekennzeichnet, daß das Porenvolumen der Stickstoffdesorption, das durch den Porendurchmesser zwischen 100 und 400 Å definiert ist, oberhalb von 0,20 cm$^3$/

g liegt.

**7.** Teilchen nach einem der vorstehenden Ansprüche, dadurch gekennzeichnet, daß die Calciumhydroxidteilchen der ersten Fraktion einen mittleren Durchmesser unterhalb von 10 μm aufweisen.

**8.** Teilchen nach einem der vorstehenden Ansprüche, dadurch gekennzeichnet, daß die Calciumhydroxidteilchen der zweiten Fraktion einen mittleren Durchmesser zwischen 50 und 80 μm aufweisen.

**9.** Teilchen nach einem der vorstehenden Ansprüche, dadurch gekennzeichnet, daß sie eine Fluidität zwischen 40 und 50 aufweisen.

**10.** Verfahren zur Herstellung von Teilchen nach einem der vorstehenden Ansprüche, umfassend

Verdünnen der Teilchen, die CaO mit einer Korngröße von weniger als 5 mm enthalten und eine Reaktivität oberhalb von 30°C/Minute aufweisen, mittels einer Wassermenge, die ausreicht, um Calciumhydroxid mit einer Restfeuchtigkeit von zwischen 15 und 30 Gew.-% zu erhalten,
Trocknen des Calciumhydroxids mittels eines Gases, das eine Temperatur unterhalb von 500°C, aber wenigstens oberhalb von 110°C und einen $CO_2$-Gehalt unterhalb von 500 mg/Nm$^3$ aufweist, um seine Restfeuchtigkeit auf wenigstens 2% abzusenken, und Zerstoßen wenigstens eines Teils des getrockneten Calciumhydroxids oder im Verlauf des Trocknens in Gegenwart eines Gases, das einen $CO_2$-Gehalt unterhalb von 500 mg/Nm$^3$ aufweist, wobei das Zerstoßen durchgeführt wird, um am Ende des Zerstoßens oder nach Zugabe eines Teils der Teilchen des getrockneten, aber nicht zerstossenen Calciumhydroxids, ein Teilchengemisch, das eine erste Fraktion von Teilchen mit einer Korngröße von weniger als 32 μm und eine Fraktion von Teilchen mit einer Korngröße von mehr als 32 μm umfaßt, zu erhalten, wobei der Gewichtsprozentsatz des Rückstandes bei 32 μm zwischen 20 und 50 liegt.

**11.** Verfahren nach Anspruch 10, dadurch gekennzeichnet, daß die Teilchen, die CaO mit weniger als 5 mm enthalten und eine Reaktivität oberhalb von 30°C/Minute aufweisen, mittels einer Wassermenge, die ausreicht, um Calciumhydroxid mit einer Restfeuchtigkeit zwischen 15 und 25 Gew.-% zu erhalten, verdünnt werden.

**12.** Verfahren nach Anspruch 10, dadurch gekennzeichnet, daß die Teilchen, die CaO mit einer Korngröße von weniger als 5 mm enthalten und eine Reaktivität oberhalb von 30°C/Minute aufweisen, mittels einer Wassermenge, die ausreicht, um Calciumhydroxid mit einer Restfeuchtigkeit zwischen 21 und 23 Gew.-% zu erhalten, verdünnt werden.

**13.** Verfahren nach einem der Ansprüche 10 bis 12, dadurch gekennzeichnet, daß CaO-Teilchen mit Korngrößen zwischen 0 und 2 mm verwendet werden.

**14.** Verfahren nach einem der Ansprüche 10 bis 13, dadurch gekennzeichnet, daß CaO-Teilchen verwendet werden, die eine Reaktivität oberhalb von 40°C/Minute aufweisen.

**15.** Verfahren nach einem der Ansprüche 10 bis 14, dadurch gekennzeichnet, daß das Trocknen und das Zerstoßen unter einer Atmosphäre durchgeführt wird, die einen $CO_2$-Gehalt unterhalb von 350 mg/Nm$^3$ aufweist.

**16.** Verwendung der Teilchen nach einem der Ansprüche 1 bis 9 zur Behandlung von Rauchgasen.

**17.** Verwendung nach Anspruch 16, wobei die Teilchen nach einem der Ansprüche 1 bis 9 in die Rauchgase gespritzt werden, und wobei die Rauchgase nach der Einspritzung in einem Hülsenfilter filtriert werden.

**Claims**

**1.** Dried calcium hydroxide particles having a moisture content of less than 2 weight %, a specific surface area greater than 30m$^2$/g, a total nitrogen desorption pore volume of at least 0.1 cm$^3$/g, and a $CO_2$ content of less than 2%, the aforementioned particles being in the form of a mixture comprising a first fraction of particles having a granulometry of less than 32μm and a second fraction of particles of granulometry greater than 32μm, the weight % of the tailings at 32 μm ranging from 20 to 50, the aforementioned particles having a nitrogen desorption pore volume consisting of pores with a diameter ranging from 100 to 400Å greater than 0.1 cm$^3$/g.

**2.** Particles according to claim 1, characterized in that the weight % of the tailings at 32 $\mu$m ranges from 30 to 40.

**3.** Particles according to claim 2, characterized in that the weight % of the tailings at 32 $\mu$m is approximately 35.

**4.** Particles according to any one of the preceding claims, characterized in that the nitrogen desorption pore volume defined by the pores with a diameter ranging from 100 to 400 Å is greater than 0.12 cm$^3$/g.

**5.** Particles according to any one of the preceding claims, characterized in that the nitrogen desorption pore volume defined by the pores with a diameter ranging from 100 to 400 Å is greater than 0.15 cm$^3$/g.

**6.** Particles according to any one of the preceding claims, characterized in that the nitrogen desorption pore volume defined by the pores with a diameter ranging from 100 to 400 A is greater than 0.20 cm$^3$/g.

**7.** Particles according to any one of the preceding claims, characterized in that the calcium hydroxide particles of the first fraction have a median diameter of less than 10 $\mu$m.

**8.** Particles according to any one of the preceding claims, characterized in that the calcium hydroxide particles of the second fraction have a median diameter ranging from 50 to 80 $\mu$m.

**9.** Particles according to any one of the preceding claims, characterized in that they have a fluidity ranging from 40 and 50.

**10.** Method for preparing particles according to any one of the preceding claims, in which particles containing CaO having a granulometry lower than 5 mm and a reactivity greater than 30°C/minute are slaked by means of a sufficient quantity of water in order to obtain a calcium hydroxide having a residual moisture ranging from 15 to 30 weight %, the aforementioned calcium hydroxide is dried by means of a gas having a temperature of less than 500°C but at least of more than 110°C and a $CO_2$ content of less than 500 mg/Nm$^3$ in order to reduce its residual moisture to less than 2%, and at least a portion of the calcium hydroxide particles dried or being dried are subjected to a crushing, in the presence of a gas having a $CO_2$ content of less than 500 mg/Nm$^3$, said crushing being carried out in order to obtain either at the end of the crushing, or after adding a part of the dried, but uncrushed, calcium hydroxide particles, a mixture of particles comprising a first fraction of particles having a granulometry of less than 32$\mu$m and a second fraction of particles having a granulometry greater than 32 $\mu$m, the weight % of tailings at 32 $\mu$m ranging from 20 to 50.

**11.** Method according to claim 10, characterized in that CaO particles having a granulometry of less than 5 mm and a reactivity greater than 30°C/minute are slaked by means of a sufficient quantity of water in order to obtain a calcium hydroxide having a residual moisture ranging from 15 to 25 weight %.

**12.** Method according to claim 10, characterized in that CaO particles having a granulometry of less than 5 mm and a reactivity greater than 30°C/minute are slaked by means of a sufficient quantity of water in order to obtain a calcium hydroxide having a residual moisture ranging from 21 to 23 weight %.

**13.** Method according to any one of claims 10 to 12, characterized in that CaO particles having a granulometry ranging from 0 to 2 mm are used.

**14.** Method according to any one of claims 10 to 13, characterized in that CaO particles having a reactivity higher than 40°C/minute are used.

**15.** Method according to any one of claims 10 to 14, characterized in that the drying and the crushing are effected in an atmosphere having a $CO_2$ content of less than 350 mg/Nm$^3$.

**16.** Utilisation of particles according to any one of the claims 1 to 9, for the treatment of fumes.

**17.** Utilisation according to claim 16, in which the particles according to any one of claims 1 to 9 are injected into the fumes and in which, after said injection, the fumes are filtered in a sleeve filter.

Fig 1

Fig 2

Fig 3

Fig 4